# EUROPEAN PATENT APPLICATION

(11) **EP 4 826 754 A1**
(43) Date of publication of application: **21.10.2026**
(21) Application number: 24903890.2
(22) Date of filing: 28.08.2024
(51) Int. Cl.: H01H 47/26, H01H 50/12, G01K 7/00, H01H 47/02

(54) **MAGNETIC CONTACTOR**

(30) Priority: 11.12.2023 KR 20230178914
(71) Applicant: LS E-MOBILITY SOLUTIONS CO., LTD., Cheongju-si, Chungcheongbuk-do 28439 (KR)
(72) Inventor: NAM, Sung Gyu, Cheongju-si, Chungcheongbuk-do 28439 (KR)
(74) Representative: K&L Gates LLP
(86) International application number: PCT/KR2024/012872
(87) International publication number: WO 2025/127319

(57) **Abstract**

A magnetic contactor is disclosed. According to one aspect of the present invention, a magnetic contactor comprises: a housing having a housing space formed therein; a current-carrying member electrically connected to an external power source or a load and coupled with the housing so as to be at least partially exposed to the outside of the housing; and a temperature-sensing device coupled with the housing so as to be at least partially exposed to the outside of the housing, positioned adjacent to but spaced apart from the current-carrying member, and configured to detect heat generated from the current-carrying member, wherein the temperature-sensing device includes: a support member coupled to the housing and accommodated in the housing space; a temperature-sensing member coupled to the support member and configured to detect the heat; and a temperature-sensing terminal coupled to the support member, electrically connected to the temperature-sensing member, and at least partially exposed to the outside of the housing.

## Description

### Technical Field

The disclosure relates to a magnetic contactor, and more particularly, to a magnetic contactor capable of having no influence on a current-carrying state to the outside even while accurately sensing a temperature of a current-carrying unit.

### Background Art

A direct current relay is a device that transmits a mechanical driving signal or a current signal, using the principle of an electromagnet. The direct current relay is also referred to as a magnetic switch and is generally classified as an electrical circuit switching device.

The direct current relay includes a fixed contact and a movable contact. The fixed contact is electrically connected to an external power source and an external load. The fixed contact and the movable contact may be in contact with or separated from each other.

By the contact and separation between the fixed contact and the movable contact, a current flow through the direct current relay is allowed or blocked. Such a movement is made by a driving unit that applies a driving force to the movable contact.

The fixed contact and the movable contact are made of a current-carrying material. As current flows when the fixed contact and the movable contact are in contact with each other, heat is generated in the fixed contact. When excessive hate is generated, a contact part of the fixed contact and the movable contact is melted or damaged, and hence there is a risk that the contact reliability of the fixed contact and the movable contact may be deteriorated.

Therefore, there is required a method for taking appropriate action such as sensing in real time heat generated in the fixed contact, accurately, a temperature of the fixed contact and blocking the current flow when the fixed contact is overheated.

Korean Registration Patent Application No. 10-2269380 discloses a thermometer for a magnetic contactor and a temperature monitoring system using the same. Specifically, there is disclosed a thermometer for a magnetic contactor, or the like, which is used to measure temperatures of a supply-side connection terminal and a load-side connection terminal of the magnetic contactor, using a separate thermometer for a magnetic contactor, and determine whether or not an abnormal temperature occurs, using measured values.

However, it is presumed that the thermometer for the magnetic contactor, or the like, which are disclosed in the prior document, are provided separately from the magnetic contactor. That is, the prior document does not provide a method for arranging a means for sensing a temperature of a contact directly in the magnetic contactor.

Japanese Registration Patent Application No. 6005490 discloses a method of estimating a temperature of a magnetic contactor and a contactor implementing the method. Specifically, there is disclosed a method for predicting a temperature of an operating coil of the contactor, using a current value measured by a current measuring means for measuring current applied to the coil without a separate sensor.

However, the method for estimating the temperature of the magnetic contactor and the contactor implementing the method, which are disclosed in the prior document, do not provide a method for directly measuring a temperature of a contact. In addition, the method of estimating the temperature, which is disclosed in the prior document, is a method of predicting a temperature, using a current value applied to the coil. Therefore, there is a risk that the accuracy of the predicted temperature is deteriorated when the measured current value is disturbed by various factors.

Furthermore, the prior documents do not provide a method for accurately sensing a temperature of the contact even while having no influence on the performance of the magnetic contactor.

Korean Registration Patent Application No. 10-2269380 (June 21, 2021)

Japanese Registration Patent Application No. 6005490 (September 16, 2016)

### Disclosure of Invention

### Technical Problem

Therefore, to obviate those problems, an aspect of the detailed description is to provide a magnetic contactor having a structure capable of accurately measuring a temperature of a contact.

Another aspect of the detailed description is to provide a magnetic contactor having a structure in which a component provided to measure a temperature has no influence on a current-carrying state.

Still another aspect of the detailed description is to provide a magnetic contactor having a structure capable of measuring a temperature of a contact, using various methods.

Still another aspect of the detailed description is to provide a magnetic contactor having a structure in which a component provided to measure a temperature is not exposed to the outside.

Still another aspect of the detailed description is to provide a magnetic contactor having a structure in which a component provided to measure a temperature can be easily electrically connected.

Still another aspect of the detailed description is to provide a magnetic contactor having a structure capable of measuring a temperature of a contact without excessively changing the structure.

Objectives of the disclosure are not limited to the above-described objectives, and other objectives of the disclosure, which are not mentioned, will be apparently understood by those skilled in the art from the following description.

### Solution to Problem

To achieve these and other advantages and in accordance with the purpose of the disclosure, as embodied and broadly described herein, there is provided a magnetic contactor including a housing having a housing space formed therein; a current-carrying unit electrically connected to an external power source or an external load, and coupled to the housing to be at least partially exposed to an outside of the housing; and a temperature sensing device coupled to the housing to be at least partially exposed to the outside of the housing, located adjacent to the current-carrying unit while being spaced apart from the current-carrying unit, and configured to detect heat generated in the current-carrying unit, wherein the temperature sensing device includes a support member coupled to the housing and accommodated in the housing space; a temperature sensing member coupled to the support member and configured to detect the heat; and a temperature sensing terminal coupled to the support member, electrically connected to the temperature sensing member, and at least partially exposed to the outside of the housing.

The housing may include a support stepped portion supporting the support member at one side in a height direction; a molding space surrounded by the support stepped portion and having the temperature sensing member located therein; and a communication opening formed recessed in one portion of the support stepped portion and extending between the molding space and the current-carrying unit, to constitute a path through which the heat is transferred.

The communication opening may be formed such that a sectional area thereof is decreased in a direction toward the temperature sensing member from the current-carrying unit.

The housing may include a support member accommodation space formed recessed in an inner surface of the housing, located at one side in a height direction of the support stepped portion, and accommodating the support member.

The support stepped portion may extend while surrounding the support member accommodation space at an outer side in a horizontal direction, and may be configured to support a portion adjacent to an outer circumference of the support member.

The temperature sensing accommodation part may include a support protrusion formed to protrude on an inner surface of the housing surrounding the support member accommodation space, and supporting the support member at an outer side in a horizontal direction.

The support protrusion may be provided in plurality, and the plurality of support protrusions may be arranged while being spaced apart from each other along one direction and another direction orthogonal to the one direction, to support the support member at a plurality positions.

The housing may include a molding column located in the support member accommodation space, extending in a direction opposite to the inner surface of the housing, and formed to be phase-changed by heat or pressure, and the support member may include a support through-hole formed inside the support member while passing through the support member, so that the molding column passes therethrough.

A molding hollow into which a tip applying the heat or the pressure is inserted may be formed recessed inside the molding column.

The temperature sensing device may be located to be biased to one side in a length direction of the housing, and the housing may include a terminal accommodation groove formed recessed in an inner surface of the one side and accommodating the temperature sensing terminal; and a pair of terminal support portions protruding on the inner surface of the one side, extending in a height direction of the housing, and arranged to face each other with the terminal accommodation groove interposed therebetween along a width direction of the housing, to support the temperature sensing terminal.

The support member may include a terminal through-hole formed inside the support member while passing through the support member; and a circuit pattern extending between the temperature sensing member and the terminal through-hole, and the temperature sensing terminal may be inserted into the terminal through-hole to be electrically connected to the circuit pattern.

The temperature sensing terminal may include a terminal body coupled to the housing and extending in a height direction of the housing; a terminal head portion continued to one end portion in a height direction of the terminal body, extending in a length direction of the housing, and supporting the support member; and a support member coupling portion continued to the terminal head portion and extending in the height direction of the housing to be inserted into the terminal through-hole.

The temperature sensing terminal may include a terminal tail portion continued to the other end portion in the height direction of the terminal body, extending in the length direction of the housing, and at least partially exposed to the outside of the housing.

The current-carrying unit may include a current-carrying terminal at least partially exposed to one side of the outside of the housing to be electrically connected to the outside.

The temperature sensing terminal may include a terminal tail portion extending in a length direction of the housing and at least partially exposed to the one side of the outside of the housing.

### Advantageous Effects of Invention

According to the above configuration, in the magnetic contactor according to the disclosure, a temperature of a contact can be accurately measured.

According to the above configuration, in the magnetic contactor according to the disclosure, a component provided to measure a temperature has no influence on a current-carrying state.

According to the above configuration, in the magnetic contactor according to the disclosure, a temperature of a contact can be measured using various methods.

According to the above configuration, in the magnetic contactor according to the disclosure, a component provided to measure a temperature is not exposed to the outside.

According to the above configuration, in the magnetic contactor according to the disclosure, a component provided to measure a temperature can be easily electrically connected.

According to the above configuration, in the magnetic contactor according to the disclosure, a temperature of a contact can be measured without excessive change in structure.

The effects of the disclosure are not limited to the effects mentioned above. Rather, it is to be understood that the effects of the disclosure include all the effects deducible from the description below.

### Brief Description of Drawings

FIG. 1 is a perspective view showing a magnetic contactor according to an embodiment of the disclosure.
FIG. 2 is a side view showing the magnetic contactor of FIG. 1.
FIG. 3 is an exploded perspective view showing a configuration of the magnetic contactor of FIG. 1.
FIG. 4 is a perspective view showing a housing arranged in the magnetic contactor of FIG. 1.
FIG. 5 is a plan view showing the housing of FIG. 4.
FIG. 6 is a side view showing the housing of FIG. 4.
FIG. 7 is a bottom view showing the housing of FIG. 4.
FIG. 8 is an enlarged view of portion A showing the housing of FIG. 4.
FIG. 9 is a sectional view taken along line D-D, showing the housing of FIG. 4.
FIG. 10 is a perspective view showing a frame and a current-carrying unit, which are arranged in the magnetic contactor of FIG. 1.
FIG. 11 is a perspective view showing an arc inducing unit arranged in the magnetic contactor of FIG. 1.
FIG. 12 is a perspective view showing a temperature sensing device arranged in the magnetic contactor of FIG. 1.
FIG. 13 is a plan view showing the temperature sensing device of FIG. 12.
FIG. 14 is an exploded perspective view showing a configuration of the temperature sensing device of FIG. 12.
FIG. 15 is a side view showing a state in which the temperature sensing device of FIG. 12 is coupled to the housing of FIG. 4.
FIG. 16 is a sectional view taken along line C-C, showing the state of FIG. 15.
FIG. 17 is a sectional view taken along line A-A, showing the state of FIG. 15.
FIG. 18 is a sectional view taken along line B-B, showing the magnetic contactor of FIG. 1.
FIG. 19 is a sectional view taken along the line A-A, showing the magnetic contactor of FIG. 1.

### Mode for the Invention

Hereinafter, embodiments of the disclosure are described in detail with reference to the accompanying drawings so that those skilled in the art may easily practice the disclosure. The disclosure may be implemented in various different forms and is not limited to the embodiments described herein. A part irrelevant to the description will be omitted to clearly describe the disclosure, and the same or similar constituent elements will be designated by the same reference numerals throughout the specification.

The words and terms used in the specification and the claims are not limitedly construed as their ordinary or dictionary meanings, and should be construed as meaning and concept consistent with the technical spirit of the disclosure in accordance with the principle that the inventors can define terms and concepts in order to best describe their disclosure.

Therefore, the configurations shown in the embodiments and drawings described in this specification are preferred examples of embodiments of the disclosure, and there may be various modifications that may replace the embodiments and drawings in this specification at the time of filing of the present application.

In the following description, descriptions of some components may be omitted to clarify the features of the disclosure.

The term "communication" used in the following description means that one or more members are connected to each other in fluid communication. In an exemplary embodiment, the communication channel may be formed by a member such as a conduit, pipe or piping. In the following description, the communication may be used as the same meaning as that one or more members are "fluidically connected" to each other.

The term "electrical conduction" used in the following description means that one or more members are connected to each other to transmit current or electrical signals. In an exemplary embodiment, the electrical conduction may be formed in a wired form using a conductor member, or in a wireless form such as Bluetooth, Wi-Fi or RFID. In an exemplary embodiment, the electrical conduction may include a meaning of "communication."

The term "fluid" used in the following description refers to a substance in any state whose shape can be changed by external pressure or temperature. In an exemplary embodiment, the fluid may be in the form of liquid such as water or gas such as air.

The terms "upper side," "lower side," "left side," "right side," "front side," and "rear side" used in the following description will be understood with reference to a coordinate system shown throughout the accompanying drawings.

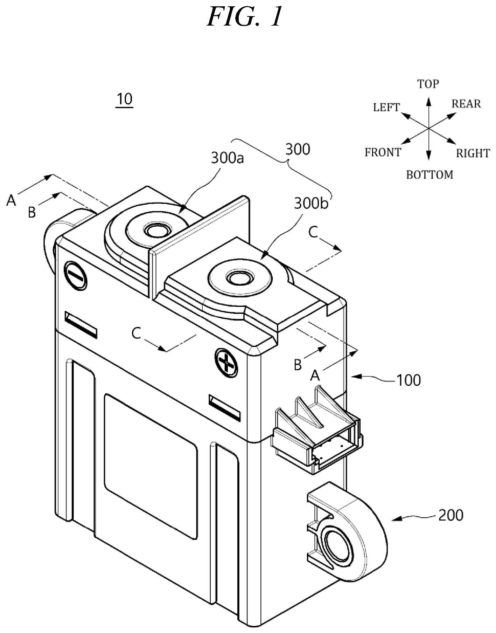

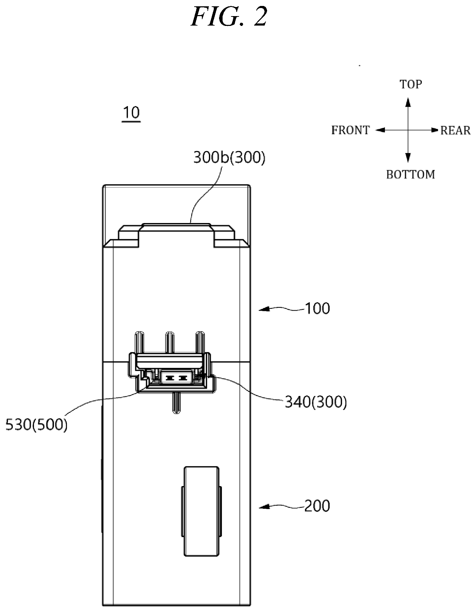

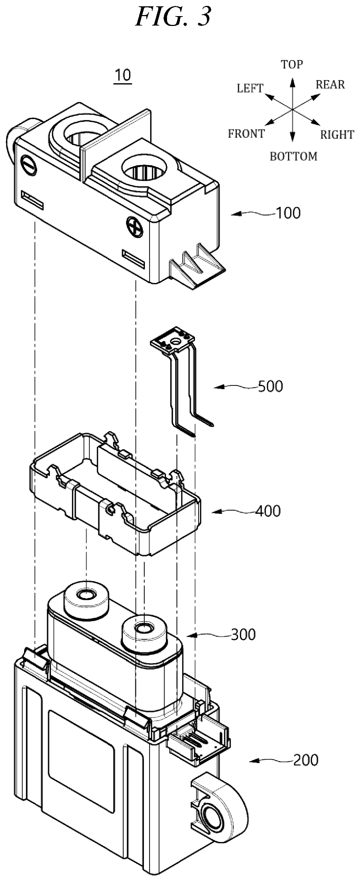

Referring to FIGS. 1 to 3, a magnetic contactor 10 according to an embodiment of the disclosure is shown. The magnetic contactor 10 according to the embodiment of the disclosure may be electrically connected to each of an external power source (not shown) and an external load (not shown). The magnetic contactor 10 may allow or block electrical connection between the external power source (not shown) and the external load (not shown). To this end, the magnetic contactor 10 includes a current-carrying unit 300 to be described later.

The magnetic contactor 10 is electrically connected to an external control unit (not shown). The magnetic contactor 10 is operated by a control current applied by the external control unit (not shown), to allow or block the electrical connection between the external power source (not shown) and the external load (not shown). To this end, the magnetic contactor 10 may include a fixed core (no reference numeral given) and a movable core (not shown), which are arranged in a frame 200 to be described later.

A process in which a current-carrying state between the external power source (not shown) and the external load (not shown) is formed or interrupted as the control current is applied to the magnetic contactor 10 is a well-known technique, and therefore, detailed description thereof will be omitted.

Meanwhile, the magnetic contactor 10 according to the embodiment of the disclosure may directly measure a temperature of a component, i.e., the current-carrying unit 300, electrically connected to the external power source (not shown) or the external load (not shown). That is, the magnetic contactor 10 according to the embodiment of the disclosure is configured to measure a temperature by directly detecting heat generated in the current-carrying unit 300 instead of a method of predicting a temperature from parameters such as an applied current value. Accordingly, the temperature of the current-carrying unit 300 can be accurately measured.

At the same time, in the magnetic contactor 10 according to the embodiment of the disclosure, a component (i.e., a temperature sensing device 500 to be described later) provided to measure a temperature of the current-carrying unit 300 may be located adjacent to the current-carrying unit 300. Thus, the temperature of the current-carrying unit 300 can be sensed in real time.

Furthermore, in the magnetic contactor 10 according to the embodiment of the disclosure, the component (i.e., the temperature sensing device 500 to be described later) accommodated inside a component (i.e., a housing 100 to be described later), and the structure change of the component (i.e., the housing 100 to be described later) can be minimized.

In the embodiment shown in FIGS. 1 to 3, the magnetic contactor 10 includes the housing 100, the frame 200, the current-carrying unit 300, an arc inducing unit 400, and the temperature sensing device 500.

The housing 100 constitute a portion of an appearance of the magnetic contactor 10. In the shown embodiment, the housing 100 constitutes one side, i.e., an upper side in a height direction of the magnetic contactor 10. The housing 100 is a portion at which the magnetic contactor 10 is exposed to the outside.

A space is formed inside the housing 100. Some components of the magnetic contactor 10 may be accommodated in the space. As will be described later, the current-carrying unit 300, the arc inducing unit 400, and the temperature sensing device 500 are accommodated in the housing 100.

The housing 100 may be made of an insulative material. This is for the purpose of preventing a situation in which current is arbitrarily carried to the components accommodated in the space and the outside. In addition, since the housing 100 is a portion through which the magnetic contactor 10 is exposed to the outside, this is for the purpose of preventing a safety accident such as electric shock.

The housing 100 is coupled to the frame 200. In an embodiment, the housing 100 may be detachably coupled to the frame 200. The space formed inside the housing 100 communicates with a space formed inside the frame 200.

The housing 100 accommodates the current-carrying unit 300 and the arc inducing unit 400. Some components of the current-carrying unit 300 is exposed to an outer side of the housing 100, to be electrically connected to each of the external power source (not shown) and the external load (not shown).

The housing 100 accommodates the temperature sensing device 500. In addition, the housing 100 supports the temperature sensing device 500.

The housing 100 may have an arbitrary shape that is coupled to the frame 200 and can accommodate the current-carrying unit 300, the arc inducing unit 400, and the temperature sensing device 500.

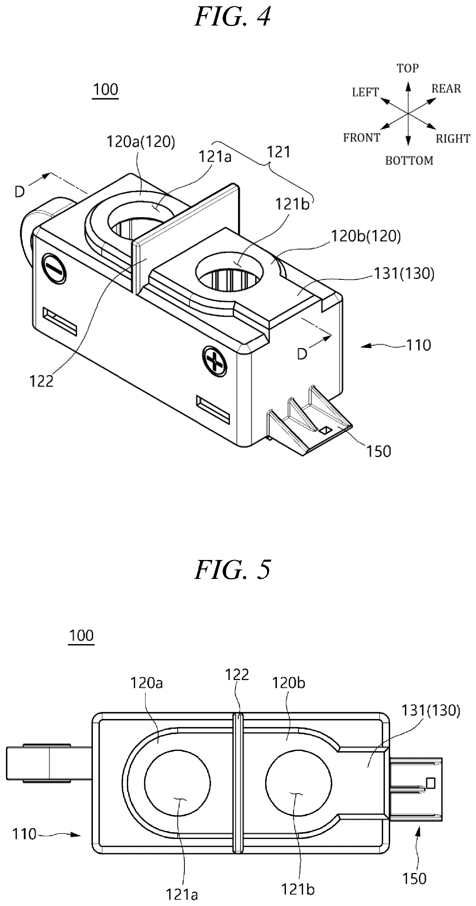

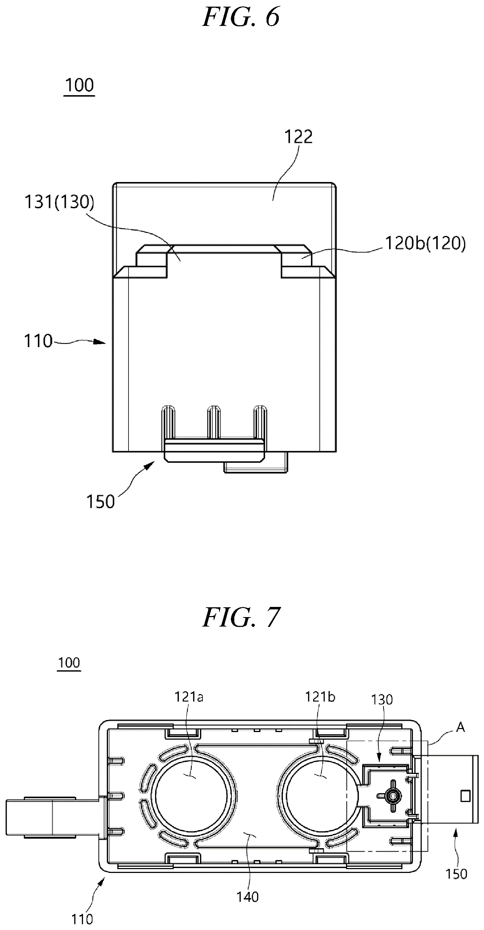

In the embodiment shown in FIGS. 4 to 9, the housing 100 includes a housing body 110, a current-carrying accommodation part 120, a temperature sensing accommodation part 130, a housing space 140, and a terminal cover 150.

The housing body 110 constitutes an appearance of the housing 100. The housing body 110 is a portion through which the housing 100 is exposed to the outside. Other components of the housing 100 are formed in or coupled to the housing body 110.

Specifically, the current-carrying accommodation part 120 and the temperature sensing accommodation part 130 are formed at one side in a height direction of the housing body 110, i.e., an upper side in the shown embodiment. Some components of the temperature sensing accommodation part 130 are formed inside the housing body 110. The housing body 110 surrounds the housing space 140. One side in a length direction of the housing body 110, i.e., a right side in the shown embodiment is coupled to the terminal cover 150.

The housing body 110 may have an arbitrary shape that constitutes the appearance of the housing 100 and has other components of the housing 100, which can be formed therein of coupled thereto. In the shown embodiment, the housing body 110 has a three-dimensional shape that has a length in a left-right direction, which is longer than a width in a front-rear direction, and has a height in an up-down direction.

The current-carrying accommodation part 120 is coupled to the current-carrying unit 300. The current-carrying accommodating part 120 accommodates and supports the current-carrying unit 300. The current-carrying unit 300 may be accommodated in the current-carrying accommodation part 120 to be at least partially exposed to an outer side of the housing body 110.

The current-carrying accommodation part 120 is formed in the housing body 110. The current-carrying accommodation part 120 is formed at one side in the height direction of the housing body 110, i.e., an upper side in the shown embodiment.

The current-carrying accommodation part 120 may be formed in plurality. The plurality of current-carrying accommodation parts 120 may be coupled to a plurality of current-carrying units 300, respectively. In the shown embodiment, the current-carrying accommodation part 120 is provided in a pair, including a first current-carrying accommodation part 120a located at one side in a length direction, i.e., a left side and a second current-carrying accommodation part 120b located at the other side in the length direction, i.e., a right side.

The current-carrying accommodation part 120 may be formed to be at least partially protrude at the upper side of the housing body 110. In the shown embodiment, the current-carrying accommodation part 120 is formed to protuberate in the shape of a boss. Accordingly, a portion at which the current-carrying accommodation part 120 is exposed to the outside protrudes as compared with other portions of the housing body 110, so that the position of the current-carrying unit 300 coupled to the portion can be easily identified.

In the shown embodiment, the current-carrying accommodation part 120 includes a current-carrying through-hole 121 and an insulating partition wall 122.

The current-carrying through-hole 121 is a portion through which the current-carrying accommodation part 120 is coupled to the current-carrying unit 300. The current-carrying through-hole 121 is formed to pass through one surface in the height direction of the housing body 110, i.e., an upper surface in the shown embodiment. The current-carrying through-hole 121 allows the housing space 140 and the outside to communicate with each other therethrough.

The current-carrying unit 300 is coupled while passing through the current-carrying through-hole 121. The current-carrying unit 300 may be coupled while passing through the current-carrying through-hole 121 to be at least partially exposed to the outer side of the housing body 110.

The current-carrying through-hole 121 may have an arbitrary shape in which the current-carrying unit 300 can be coupled while passing therethrough. In the shown embodiment, the current-carrying through-hole 121 is formed as a disk-shaped space that has a circular section and has a thickness in the up-down direction. Each end portion in a thickness direction of the current-carrying through-hole 121, i.e., each of an upper end portion and a lower end portion in the shown embodiment is formed to be open.

The current-carrying through-hole 121 may be provided in plurality. The plurality of current-carrying through-holes 121 are arranged while being spaced apart from each other, to be respectively coupled to the plurality of current-carrying units 300. In the shown embodiment, the current-carrying through-hole 121 is provided in a pair, including a first current-carrying through-hole 121a and a second current-carrying through-hole 121b. The first current-carrying through-hole 121a and the second current-carrying through-hole 121b are arranged while being spaced apart from each other in the length direction of the housing body 110, i.e., the left-right direction.

The first current-carrying through-hole 121a and the second current-carrying through-hole 121b are arranged to face each other with the insulating partition wall 122 interposed therebetween. Therefore, a first current-carrying unit 300a coupled to the first current-carrying through-hole 121a and a second current-carrying unit 300b coupled to the second current-carrying through-hole 121b may be electrically spaced apart from each other.

The insulating partition wall 122 allows the first and second current-carrying units 300a and 300b to be electrically spaced apart from each other. The insulating partition wall 122 is located between the first and second current-carrying through-holes 121a and 121b along the length direction of the housing body 110, i.e., the left-right direction in the shown direction.

The insulating partition wall 122 is coupled to the housing body 110. The insulating partition wall 122 is located at one side of the height direction of the housing body 110, i.e., an upper side in the shown embodiment.

The insulating partition wall 122 may have an arbitrary shape located between the first and second current-carrying units 300a and 300b, to allow the first and second current-carrying units 300a and 300b to be electrically spaced apart from each other. In the shown embodiment, the insulating partition wall 122 is formed in a plate shape that has a length in the front-rear direction, a height in the up-down direction and a thickness in the left-right direction.

The temperature sensing accommodation part 130 accommodates the temperature sensing device 500. In addition, the temperature sensing accommodation part 130 supports the temperature sensing device 500. The temperature sensing accommodation part 130 is partially formed at each of an outside and an inside of the housing body 110.

The temperature sensing accommodation part 130 is located adjacent to any one of the plurality of current-carrying through-holes 121a and 121b. In the shown embodiment, the temperature sensing accommodation part 130 is located adjacent to the second current-carrying through-hole 121b located at the right side and the second current-carrying unit 300b coupled thereto.

The temperature sensing accommodation part 130 is located in the housing space 140. The temperature sensing device 500 accommodated in the temperature sensing accommodation part 130 is not exposed to the outside of the housing body 110, except a portion (i.e., a terminal tail portion 533 to be described later) of a temperature sensing terminal 530 electrically connected to the outside.

In the shown embodiment, the temperature sensing accommodation part 130 is provided in singularity. Alternatively, the temperature sensing accommodation part 130 is provided in a pair, corresponding to the number of current-carrying units 300, to be respectively located adjacent to the first and second current-carrying through-holes 121a and 121b.

In the shown embodiment, the temperature sensing accommodation part 130 includes a temperature sensing boss portion 131, a support stepped portion 132, a support member accommodation space 133, a molding space 134, a communication opening 135, a molding column 136, a support protruding portion 137, a terminal support portion 138, and a terminal accommodation groove 139.

The temperature sensing boss portion 131 is formed at an outside of the housing body 110. The temperature sensing boss portion 131 is located at one side in the height direction of the housing body 110, i.e., on an upper side surface in the shown embodiment. Like the current-carrying accommodation part 120, the temperature sensing boss portion 131 is formed to protuberate in the shape of a boss. The temperature sensing boss portion 131 is continued to the second current-carrying accommodation part 120b.

Accordingly, a portion at which the temperature sensing device 500 is located protrudes as compared with other portions of the housing body 110, so that the position of the temperature sensing device 500 coupled to the portion can be easily identified.

The support stepped portion 132 supports a support member 510 included in the temperature sensing device 500. The support stepped portion 132 may support the support member 510 in a height direction. In the shown embodiment, the support stepped portion 132 may support the support member 510 in a direction toward the temperature sensing boss portion 131, i.e., at an upper side in the shown embodiment.

The support stepped portion 132 is formed on an inner surface of the housing body 110. The support stepped portion 132 is arranged to face the temperature sensing boss portion 131 with one side in the height direction of the housing body 110, i.e., an upper surface in the shown embodiment, which is interposed therebetween. The support stepped portion 132 is formed to protrude on an upper inner surface of the housing body 110.

A space located at a lower side of the support stepped portion 132 is defined as the support member accommodation space 133. The support member 510 is accommodated in the support member accommodation space 133, and one side in a height direction, i.e., an upper direction in the shown direction may be supported by the support stepped portion 132.

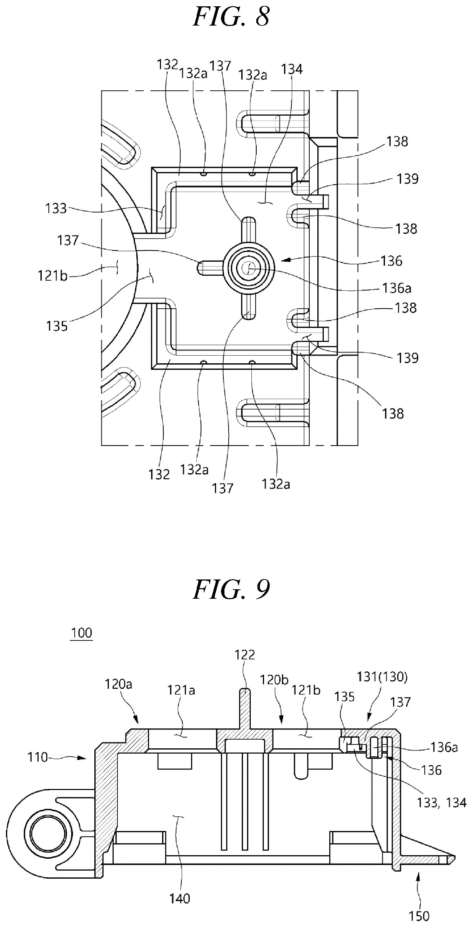

The support stepped portion 132 may extend while surrounding the molding space 134. The support stepped portion 132 may extend while partially surrounding the molding space 134. As best shown in FIG. 8, the support stepped portion 132 entirely surrounds the molding space 134 in a width direction of the housing body 110, i.e., at a front side and a rear side.

One side in a length direction of the support stepped portion 132, i.e., a left portion in the shown embodiment partially surrounds the molding space 134. The communication opening 135 is formed recessed in the left portion of the support stepped portion 132. Therefore, the left portion of the support stepped portion 132 may be divided into a portion located at the front side and another portion located at the rear side. The one portion and the another portion are spaced apart from each other in the front-rear direction, so that the communication opening 135 is located between the one portion and the another portion.

The other side in the length direction of the support stepped portion 132, i.e., a right portion in the shown embodiment is located adjacent to the terminal support portion 138. In an embodiment, the other end portion in the length direction of the support stepped portion 132 may be continued to the terminal support portion 138.

Therefore, the molding space 134 may communicate with the second current-carrying through-hole 121b through the communication opening 135.

The support stepped portion 132 may be formed to correspond to a sectional shape of the support member 510. In the shown embodiment, the support stepped portion 132 has a quadrangular outer circumferential shape with an entirely open right side, and the communication opening 135 is formed at a left side of the support stepped portion 132.

In the shown embodiment, a support protrusion 132a is arranged adjacent to the support stepped portion 132.

The support protrusion 132a supports the support member 510 arranged on the support stepped portion 132. The support protrusion 132a may support the support member 510 in a width direction. In the shown embodiment, the support protrusion 132a may support the support member 510 at a front side and a rear side.

The support protrusion 132a is located adjacent to the support stepped portion 132. Specifically, the support protrusion 132a surrounds the support member accommodation space 133 in a width direction, i.e., at a front side and a rear side, and is formed to protrude on a surface continued to the support stepped portion 132 in a width direction. A protruding length of the support protrusion 132a may be formed shorter than a length in the width length of the support stepped portion 132, i.e., a length in the front-rear direction.

The support protrusion 132a may be provided in plurality. The plurality of support protrusion 132a are arranged while being spaced apart from each other along a width direction or a length direction of the housing 100, to support the support member 510 at different positions.

In the shown embodiment, the support protrusion 132a is provided in two pairs. Any one pair of support protrusions 132a are located at one side in the width direction of the housing 100, and are arranged while being spaced apart from each other in the width direction of the housing 100, i.e., the left-right direction. Another pair of support protrusions 132a are located at the other side in the width direction of the housing 100, and are arranged while being spaced apart from each other in the width direction of the housing 100, i.e., the left-right direction.

The one pair of support protrusions 132a and the another pair of support protrusions 132b are arranged to face each other with the molding space 134 interposed therebetween along the width direction of the housing 100, i.e., the front-rear direction.

Therefore, the support member 510 is guided by the support protrusions 132a and is accommodated in the support member accommodation space 133 to be able to mounted on the support steeped portion 132. Accordingly, the support member 510 can be accurately located at a predetermined position.

In addition, after the support member 510 is mounted on the support stepped portion 132, the height direction of the support member 510 may be supported by the support stepped portion 132, and each side in a width direction of the support member 510 may be supported by the support protrusions 132a. Thus, the support member 510 is prevented from being arbitrarily shaken, so that the coupling state of the support member 510 and the temperature sensing accommodation part 130 can be stably maintained.

A space formed at a lower side of the support stepped portion 132 is defined as the support member accommodation space 133.

The support member accommodation space 133 accommodates the support member 510. The support member accommodation space 133 may be defined while being surrounded by the support stepped portion 132. In the shown embodiment, one side in a height direction of the support member accommodation space 133, i.e., an upper side in the shown embodiment. is surrounded by the support stepped portion 132. The other side in the height direction of the support member accommodation space 133, i.e., a lower side in the shown embodiment is opened to communicate with the housing space 140.

The support member accommodation space 133 may have a shape corresponding to that of the support member 510. In the shown embodiment, the support member accommodation space 133 is formed as a three-dimensional shaped space having a quadrangular section and a height in the up-down direction.

The support member accommodation space 133 communicates with the molding space 134. The support member 510 accommodated in the support member accommodation space 133 seals the molding space 134 at one side in a height direction, i.e., a lower side in the shown embodiment. Therefore, a molding material formed as the molding column 136 is melted is accommodated in the molding space 134 to couple the support member 510 to the housing body 110, and is not leaked to an outer side of the molding space 134.

The support member accommodation space 133 may be formed to have a height corresponding to that of the support member 510. Accordingly, the support member 510 accommodated in the support member accommodation space 133 does not protrude to the housing space 140.

The molding space 134 accommodates the molding material formed as the molding column 136 is melted. The molding material accommodated in the molding space 134 couples the support member 510 to the housing body 110.

The molding space 134 is defined while being surrounded by the support stepped portion 132. In the shown embodiment, a front side and a rear side of the molding space 134 are surrounded by the support stepped portion 132. One side in a length direction of the molding space 134, i.e., a left portion in the shown embodiment communicates with the communication opening 135 formed in the support stepped portion 132. The other side in the length direction of the molding space 134, i.e., a right portion in the shown embodiment is surrounded by a right inner surface of the housing body 110 and the terminal support portion 138.

The molding space 134 may be covered by the support member 510. The support member 510 may be accommodated in the support member accommodation space 133 while covering the molding space 134 at the lower side. The molding material accommodated in the molding space 134 is coupled to each of an upper inner surface of the housing body 110, the support stepped portion 132, and the support member 510.

A temperature sensing member 520 is accommodated in the molding space 134. As will be described later, the temperature sensing member 520 is located at one side adjacent to the communication opening 135, i.e., a left side in the shown embodiment among sides of the molding space 134. The temperature sensing member 520 may detect heat transferred through the communication opening 135.

The molding space 134 may have an arbitrary shape capable of accommodating the molding material for coupling the support member 510 to the housing body 110 and the temperature sensing member 520. In the shown embodiment, the molding space 134 is formed as a three-dimensional shaped space having a quadrangular shape and a height in the up-down direction.

The communication opening 135 communicates the housing space 140 and the molding space 134 with each other. Heat generated in the current-carrying unit 300 accommodated in the housing space 140 may be transferred to the molding space 134 through the communication opening 135. The communication opening 135 forms a path through which the heat generated in the current-carrying unit 300 is transferred to the temperature sensing member 520. The heat generated in the current-carrying unit 300 may be transferred in the form of convection or radiation along the communication opening 135.

The communication opening 135 extends between the current-carrying through-hole 121 and the molding space 134. In the shown embodiment, the communication opening 135 extends between the second current-carrying through-hole 121b located at a right side and the molding space 134. The communication opening 135 communicates with each of the current-carrying through-hole 121 and the molding space 134. The communication opening 135 is formed recessed in each of the upper inner surface of the housing body 110 and the support stepped portion 132.

The communication opening 135 may have an arbitrary shape forming the path through which the heat generated in the current-carrying unit 300 is transferred to the temperature sensing member 520 accommodated in the molding space 134. In the shown embodiment, the communication opening 135 is formed such that a length of the width thereof (i.e., a length in the front-rear direction) is constant along an extending direction thereof (i.e., the left-right direction).

Alternatively, the communication opening 135 may be formed such that a sectional area of one side toward the current-carrying through-hole 121 is larger than a sectional area of the other side toward the molding space 134. In the embodiment, the communication opening 135 may be formed such that a sectional area thereof is decreased along a direction toward the molding space 134 from the second current-carrying through-hole 121b. In the embodiment, the heat generated in the current-carrying unit 300 may be concentrated toward the temperature sensing member 520 accommodated in the molding space 134.

The molding column 136 is made of the molding material that couples the support member 510 to the housing body 110. The molding column 136 is phase-changed in the form of a fluid by being heated or pressed by an external tip or the like, to flow in the molding space 134. The molding material formed as the molding column 136 is phase-changed is filled in the molding space 134 and then again phase-changed in the form of a solid, to couple the support member 510 to the housing body 110.

The molding column 136 may be made of an arbitrary material that is phase-changed by heat and is cooled to be again phase-changed. In an embodiment, the molding column 136 may be made of a resin material.

The molding column 136 is located in the molding space 134. The molding column 136 is surrounded by the support stepped portion 132, and may be located to be spaced apart from the support stepped portion 132. The molding column 136 extends to a lower side from a surface surrounding the molding space 134 at an upper side, i.e., the upper inner surface of the housing body 110.

The molding column 136 is continued to the support protruding portion 137. In the shown embodiment, a front side, a rear side, and a left side of the outer circumference of the molding column 136 are continued to the support protruding portion 137.

Meanwhile, before the molding column 136 is phase-changed, the molding column 136 may be coupled to the support member 510. The molding column 136 passes through a support through-hole 511, so that the support member 510 is maintained at the predetermined position and the heated or pressed by the external tip or the like.

The molding column 136 may have an arbitrary shape that is coupled to the support member 510 and is heated or pressed by the external tip or the like to be phase changed. In the shown embodiment, the molding column 136 is formed to have an annular section in which a molding hollow 136a is formed therein and have a height in the up-down direction. The external tip is inserted in the molding hollow 136a, to apply heat or pressure to the molding column 136.

The molding hollow 136a may have an arbitrary shape capable of accommodating the external tip. In the shown embodiment, the molding hollow 136a is formed as a cylinder-shaped space having a circular section and a height in the up-down direction.

It will be understood that the above-described molding column 136 becomes extinct when coupling of the temperature sensing device 500 and the housing is completed. That is, the molding column 136 is changed to the molding material accommodated in the molding space 134.

The support protruding portion 137 supports the support member 510 accommodated in the support member accommodation space 133. The support protruding portion 137 protrudes on a surface surrounding the molding space 134 at an upper side, i.e., the upper inner surface of the housing body 110. The support protruding portion 137 is continued to an outer circumference of the molding column 136.

The support protruding portion 137 may support the support member 510 before the molding column 136 is phase-changed. That is, the support stepped portion 132 supports an outer portion of the support member 510 accommodated in the support member accommodation space 133, and the support protruding portion 137 supports an inner portion of the support member 510.

Therefore, the support member 510 coupled to the molding column 136 may be accommodated in the support member accommodation space 133 in a horizontal state.

The support protruding portion 137 may be provided in plurality. The plurality of support protruding portions 137 may be continued to different portions of the molding column 136, respectively. In the shown embodiment, three support protruding portions 137 are arranged, to be continued to the front side, the rear side, and the left side of the molding column 136, respectively.

In an embodiment, the support protruding portion 137 is made of a same material as the molding column 136, to be phase-changed by heat or pressure that the external tip applies. In the embodiment, the phase-changed support protruding portion 137 may also couple the support member 510 to the upper inner surface of the housing body 110.

The terminal support portion 138 supports the temperature sensing terminal 530 included in the temperature sensing device 500. The temperature sensing terminal 530 may be maintained in a state in which the temperature sensing terminal 530 is coupled to the housing 100 without being shaken by the terminal support portion 138.

The terminal support portion 138 is formed in the housing body 110. Specifically, the terminal support portion 138 is formed at one side in the length direction of the housing body 110, i.e., in a right inner surface in the shown embodiment. The terminal support portion 138 arranged to face the communication opening 135 with the molding space 134 interposed therebetween.

The terminal support portion 138 is located in the molding space 134. The terminal support portion 138 along with the support stepped portion 132 may surround the molding space 134. In the shown embodiment, the terminal support portion 138 partially surrounds the molding space 134 at a right side.

The terminal support portion 138 may protrude toward an inner side from the right inner surface of the housing body 110. The terminal support portion 138 extends in the height direction of the housing body 110, i.e., the up-down direction. The terminal support portion 138 may be formed in plurality. The plurality of terminal support portions 138 are spaced apart from each other, to support a plurality of temperature sensing terminals 530 at different positions, respectively. In the shown embodiment, two terminal support portions 138 are arranged, to be spaced apart from each other in the front-rear direction. The number and arrangement of terminal support portions 138 may be changed depending on the number and arrangement of temperature sensing terminals 530.

Each of a pair of terminal support portions 138 may be configured with a pair of portions. The portions may be arranged to be spaced apart from each other in the width direction of the housing body 110, i.e., the front-rear direction in the shown embodiment. A space formed as the portions are spaced apart from each other is defined as the terminal accommodation groove 139.

The terminal accommodation groove 139 accommodates the temperature sensing terminal 530. The temperature sensing terminal 530 is accommodated in the terminal accommodation groove 139, to be supported by the terminal support portion 138 and the housing body 110.

The terminal accommodation groove 139 is located between a pair of portions constituting the terminal support portion 138. The terminal accommodation groove 139 is defined as the pair of portions constituting the terminal support portion 138 are spaced apart from each other. A portion of the terminal accommodation groove 139 may be formed recessed in the right inner surface of the housing body 110. The terminal accommodation groove 139 communicates with the housing space 140.

The terminal accommodation groove 139 may have a shape corresponding to that of the terminal support portion 138 or the temperature sensing terminal 530. In the shown embodiment, the terminal accommodation groove 139 has a quadrangular section and extends in the up-down direction.

The housing space 140 is a space formed inside the housing body 110. The housing space 140 is defined while being surrounded by surfaces of the housing body 110. One side in a height direction of the housing space 140, i.e., a lower side in the shown embodiment is opened to communicate with a space of the frame 200.

The housing space 140 accommodates other components of the magnetic contactor 10. In the shown embodiment, the housing space 140 accommodates the current-carrying unit 300, the arc inducing unit 400, and the temperature sensing device 500.

The housing space 140 communicates with the outside. The current-carrying unit 300 passing through the current-carrying through-hole 121 may be at least partially exposed to an arc chamber 230 accommodated in the housing space 140.

The housing space 140 may have a shape corresponding to that of the housing body 110. In the shown embodiment, the housing space 140 is formed to have a length in the left-right direction, which is longer than a width in the front-rear direction, and have a height in the up-down direction.

The terminal cover 150 covers a current-carrying terminal 340 and the temperature sensing terminal 530, exposed to an outer side of the housing 100. The terminal cover 150 at least partially surrounds a portion exposed to the outer side of the housing 100 among portions of the current-carrying terminal 340 and the temperature sensing terminal 530. An external connector (not shown) may be easily coupled to the current-carrying terminal 340 and the temperature sensing terminal 530 by the terminal cover 150.

The terminal cover 150 is coupled to the housing body 110. The terminal cover 150 is continued to one side in the length direction of the housing body 110, i.e., a right side in the shown embodiment. The terminal cover 150 is arranged to cover the current-carrying terminal 340 and the temperature sensing terminal 530 at an upper side.

The frame 200 along with the housing 100 constitutes the appearance of the magnetic contactor 10. In the shown embodiment, the frame 200 constitutes the other side in the height direction of the magnetic contactor 10, i.e., a lower side. The frame 200 is a portion at which the magnetic contactor 10 is exposed to the outside.

A space is formed inside the frame 200. Other components of the magnetic contactor 10 may be accommodated in the space. For example, a fixed core, a movable core, a bobbin, a shaft, a coil, and the like, to which reference numerals are not given, may be accommodated in the frame 200.

The frame 200 may be made of an insulative material. This is for the purpose of preventing a situation in which current is arbitrarily carried to the components accommodated in the space and the outside. In addition, since the frame 200 is a portion through which the magnetic contactor 10 is exposed to the outside, this is for the purpose of preventing a safety accident such as electric shock.

The frame 200 is coupled to the housing 100. In an embodiment, the frame 200 may be detachably coupled to the housing 100. The space formed inside the frame 200 communicates with the space formed inside the housing 100.

The frame 200 may have an arbitrary shape capable of accommodating other components of the magnetic contactor 10.

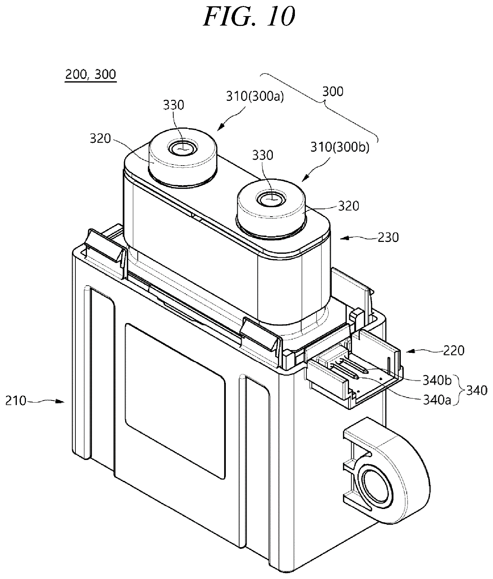

In the embodiment shown in FIG. 10, the frame 200 includes a frame body 210, a terminal protection member 220, and the arc chamber 230. Since the arc chamber 230 is accommodated in the housing space 140, it will be understood that the arc chamber 230 may be regarded as a component of the housing 100.

The frame body 210 constitutes an appearance of the frame 200. The frame body 21 is a portion at which the frame 200 is exposed to the outside. Other components of the frame 200 are formed in or coupled to the frame body 210.

Specifically, the terminal protection member 220 is formed at one side in a length direction of the frame body 210, i.e., a right side in the shown embodiment. The fixed core, the movable core, the bobbin, the shaft, the coil, and the like may be accommodated in a space formed inside the frame body 210.

The frame body 210 may have an arbitrary shape that constitutes the appearance of the frame 200 and has other components of the frame 200, which are formed therein or coupled thereto. In the shown embodiment, the frame body 210 has a three-dimensional shape that has a length in the left-right direction, which is longer than a width in the front-rear direction, and has a height in the up-down direction.

The terminal protection member 220 covers the current-carrying terminal 340 and the temperature sensing terminal 530. The terminal protection member 220 at least partially surrounds a portion exposed to the outer side of the housing 100 among the portions of the current-carrying terminal 340 and the temperature sensing terminal 530. The external connector (not shown) may be easily coupled to the current-carrying terminal 340 and the temperature sensing terminal 530 by the terminal protection member 220.

The terminal protection member 220 is arranged to face the terminal cover 150 with the current-carrying terminal 340 and the temperature sensing terminal 530, which are interposed therebetween. In the shown embodiment, the terminal protection member 220 surrounds lower sides of the current-carrying terminal 340 and the temperature sensing terminal 530, and faces the terminal cover 150 surrounding upper sides of the current-carrying terminal 340 and the temperature sensing terminal 530.

The terminal protection member 220 is coupled to the frame body 210. The terminal protection member 220 is continued to one side in the length direction of the frame body 210, i.e., the right side in the shown embodiment. The terminal protection member 220 surrounds the current-carrying terminal 340 and the temperature sensing terminal 530 at a lower side.

The positions and shapes of the terminal cover 150 and the terminal protection member 220, which are described above, may be changed depending on the positions and shapes of the current-carrying terminal 340 and the temperature sensing terminal 530.

The arc chamber 230 accommodates a portion of the current carrying unit 300 and a movable contact (no reference numeral given). The arc chamber 230 prevents arbitrary leakage of an arc generated as the current-carrying unit 300 and the movable contact (no reference numeral given) are spaced apart from each other. The generated arc may be sufficiently extinguished and then leaked to the outside of the arc chamber 230.

The arc chamber 230 is located in the housing space 140. A space is formed inside the arc chamber 230 to accommodate one side in a length direction of the current-carrying unit 300, i.e., a lower portion and the movable contact (no reference numeral given). The movable contact (no reference numeral given) may be located inside the arc chamber 230 to be movable up and down.

The arc chamber 230 is surrounded by the arc inducing unit 400. An arc generated inside the arc chamber 230 may be induced in a predetermined direction by the arc inducing unit 400.

The arc chamber 230 may have an arbitrary shape that at least partially accommodates the current-carrying unit 300 and the movable contact (no reference numeral given), and can extinguish and then discharge the generated arc. In the shown embodiment, the arc chamber 230 has a three-dimensional shape that has a length in the left-right direction, which is longer than a width in the front-rear direction, and has a height in the up-down direction.

The current-carrying unit 300 has a configuration in which the magnetic contactor 10 is electrically connected to the external power source (not shown) and the external load (not shown). The current-carrying unit 300 may be provided in plurality. Any one of the plurality of current-carrying units 300 may be electrically connected to the external power source (not shown). Another of the plurality of current-carrying units 300 may be electrically connected to the external load (not shown).

In the embodiment shown in FIG. 10, the current-carrying unit 300 is provided in a pair, including the first current-carrying unit 300a and the second current-carrying unit 300b.

The current-carrying unit 300 is coupled to the housing 100. The current-carrying unit 300 is coupled while passing through the current-carrying through-hole 121, so that a portion thereof is exposed to the outer side of the housing 100. Another portion of the current-carrying unit 300 is located inside the arc chamber 230 located in the housing space 140, to be in contact with or spaced apart from the movable contact (no reference numeral given).

The current-carrying unit 300 may be fixedly coupled to the housing 100. Therefore, it will be understood that the current-carrying unit 300 may be defined as a fixed contact.

In the embodiment shown in FIG. 10, the current-carrying unit 300 includes a current-carrying body 310, a current-carrying outer circumference 320, a current-carrying hollow 330, and the current-carrying terminal 340.

The current-carrying body 310 constitutes an appearance of the current-carrying unit 300. The current-carrying body 310 is coupled while passing through the current-carrying through-hole 121, so that a portion thereof is exposed to the outer side of the housing 100. Another portion of the current-carrying body 310 is at least partially exposed to an internal space of the arc chamber 230, to be in contact with or spaced apart from the movable contact (no reference numeral given).

The current-carrying body 310 may have a shape corresponding to the current-carrying through-hole 121. In the shown embodiment, the current-carrying body 310 is formed in a cylindrical shape having a circular section and a height in the up-down direction.

The current-carrying outer circumference 320 is defined as an outer circumferential surface of the current-carrying body 310. In an embodiment in which the current-carrying body 310 is formed in a cylindrical shape, the current-carrying outer circumference 320 may be defined as a side surface of the current-carrying body 310.

Heat generated as the current-carrying unit 300 is in contact with the movable contact (no reference numeral given) may be radiated through the current-carrying outer circumference 320. Heat generated in the current-carrying outer circumference 320 may be transferred to the temperature sensing member 520 through the communication opening 135 located adjacent to the current-carrying through-hole 121.

As described above, heat generated in the current-carrying unit 300 may be transferred to the temperature sensing member 520 in the form of convection or radiation. Therefore, although not shown in the drawings, the current-carrying outer circumference 320 may be formed in a shape for maximizing a convection effect.

The current-carrying hollow 330 is a space formed inside the current-carrying body 310. A cable (not shown) connected to the external power source (not shown) and the external load (not shown) is inserted into the current-carrying hollow 330. Accordingly, the external power source (not shown) and the load (not shown) are electrically connected to the current-carrying body 310.

The current-carrying hollow 330 extends in a height direction of the current-carrying body 310, i.e., the up-down direction in the shown embodiment. One side in an extending direction of the current-carrying hollow 330, i.e., an upper side in the shown embodiment is opened such that the cable (not shown) is inserted thereinto. The other side in the extending direction of the current-carrying hollow 330, i.e., a lower side in the shown embodiment is closed such that an insertion length of the cable (not shown) is limited.

The current-carrying terminal 340 is electrically connected to the external control unit (not shown). The current-carrying terminal 340 is electrically connected to a coil (no reference numeral given) (i.e., accommodated inside the frame 200). Accordingly, the coil (no reference numeral given) forms a magnetic field by means of a control current applied from the external control unit (not shown), thereby magnetizing the fixed core (no reference numeral given).

The current-carrying terminal 340 is coupled to the frame 200. The current-carrying terminal 340 is exposed to the outside of the frame 200. In the shown embodiment, the current-carrying terminal 340 is exposed to one side in the length direction of the frame 200, i.e., a right upper side. Therefore, it will be understood that the current-carrying terminal 340 may be described as one component of the frame 200.

The current-carrying terminal 340 is located adjacent to the terminal tail portion 533 of the temperature sensing terminal 530. Therefore, each of the current-carrying terminal 340 and the temperature sensing terminal 530 may be electrically connected to the external control unit (not shown) by a single connector.

The current-carrying terminal 340 may be provided in plurality. The plurality of current-carrying terminals 340 may be electrically connected to each of the external control unit (not shown) and the coil (no reference numeral given). In the shown embodiment, the current-carrying terminal 340 is provided in two, including a first current-carrying terminal 340a and a second current-carrying terminal 340b.

The first and second current-carrying terminals 340a and 340b may be arranged to face each other with a pair of temperature sensing terminals 530a and 530b interposed therebetween.

The arc inducing unit 400 induces an arc generated in the arc chamber 230 in the predetermined direction. The arc inducing unit 400 is arranged to surround the arc chamber 230, to form a magnetic field inside the arc chamber 230.

The arc inducing unit 400 is accommodated in the housing space 140. The arc inducing unit 400 is located between the housing body 110 and the arc chamber 230.

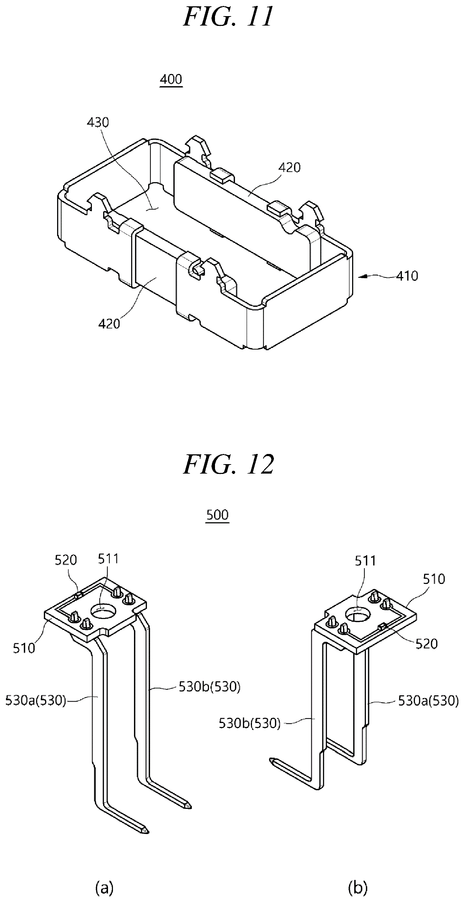

In the embodiment shown in FIG. 11, the arc inducing unit 400 includes an arc inducing frame 410, a magnet member 420, and an arc inducing space 430.

The arc inducing frame 410 constitutes a body of the arc inducing unit 400. The arc inducing frame 410 is coupled to the magnetic member 420 and surrounds the arc inducing space 430.

The arc inducing frame 410 may be divided into a plurality of portions. Any one of the plurality of portions may be coupled to one side in a length direction of the magnetic member 420, and another of the plurality of portions may be coupled to the other side in the length direction of the magnetic member 420. In the shown embodiment, the arc inducing frame 410 is configured with a pair of portions, to be coupled to a left side and a right side of the magnetic member 420, respectively.

The magnet member 420 forms a magnetic field inside the arc chamber 230. Since the generated arc is a flow of electrons, an electromagnetic force may be generated by the formed magnetic field. Therefore, the generated arc may be induced in the predetermined direction.

The magnet member 420 is coupled to the arc inducing frame 410. The magnetic member 420 along with the arc inducing frame 410 surrounds the arc inducing space 430 and the arc chamber 230 accommodated therein.

The magnet member 420 may be provided in plurality. The plurality of magnetic members 420 are arranged while being spaced apart from each other, to be each coupled to the arc inducing frame 410. In the shown embodiment, the magnetic member 420 is provided in a pair, to be arranged while being spaced apart from each other in the front-rear direction. Left and right portions of each of the pair of magnetic members 420 are coupled to the pair of portions of the arc inducing frame 410, respectively.

The arc inducing space 430 is a space that accommodates the arc chamber 230. The arc inducing space 430 is defined while being surrounded by the arc inducing frame 410 and the magnetic member 420. The magnetic field formed by the magnetic member 420 may be located in the arc inducing space 430.

The arc inducing space 430 may have a shape corresponding to that of the arc chamber 230. In the shown embodiment, the arc inducing space 430 is formed as a three-dimensional shaped space that has a length in the left-right direction, which is longer than a width in the front-rear direction, and has a height in the up-down direction.

Referring back to FIGS. 1 to 3, the magnetic contactor 10 according to the embodiment of the disclosure includes the temperature sensing device 500.

The temperature sensing device 500 is configured to detect heat generated in the magnetic contactor 10. Since a component that generates the most heat in the magnetic contactor 10 is the current-carrying body 310 (i.e., the fixed contact), the temperature sensing device 500 is located adjacent to the current-carrying body 310, to detect heat generated in the current-carrying body 310.

The temperature sensing device 500 is located adjacent to the current-carrying body 310, and is arranged not to be in contact with the current-carrying body 310. Therefore, the heat generated in the current-carrying body 310 is not transferred to the temperature sensing device 500 in the form of conduction. Accordingly, damage of the temperature sensing device 500 due to heat can be prevented.

In addition, performance deterioration of the current-carrying body 310 due to contact of another component with the current-carrying body 310 can be prevented. That is, as the temperature sensing device 500 is arranged while being spaced apart from the current-carrying body 310, a component, e.g., a screw member, an adhesive, or the like for allowing the temperature sensing device 500 to be in contact with the current-carrying body 310 is unnecessary. As described above, the temperature sensing device 500 is coupled to the housing 100.

Thus, the temperature sensing device 500 can be easily arranged and coupled while the performance of the current-carrying unit 300 is maintained.

In addition, the temperature sensing device 500 is accommodated in the housing 100. Only the terminal tail portion 533 electrically connected to the external control unit (not shown) among components of the temperature sensing device 500 is exposed to the outside of the housing 100. Thus, damage of the temperature sensing device 500 due to external environments can be prevented, and heat generated in the current-carrying body 310 can be accurately detected.

The temperature sensing device 500 is located on the temperature sensing accommodation part 130. The temperature sensing device 500 may be coupled to the housing body 110 by the molding material formed as the molding column 136 is phase-changed.

The temperature sensing device 500 is located adjacent to the current-carrying unit 300. In the shown embodiment, the temperature sensing device 500 is provided in singularity, to be located adjacent to the second current-carrying unit 300b located at the right side. Alternatively, the temperature sensing device 500 is provided in plurality, to be respectively located adjacent to the first and second current-carrying units 300a and 300b, which has been described above.

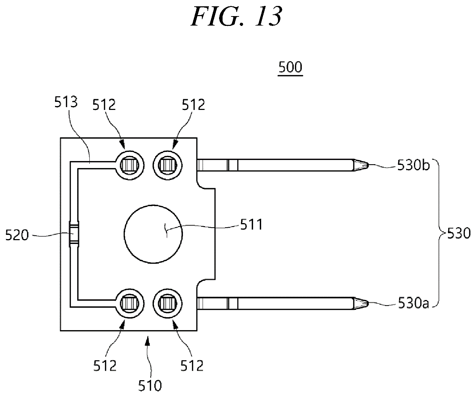

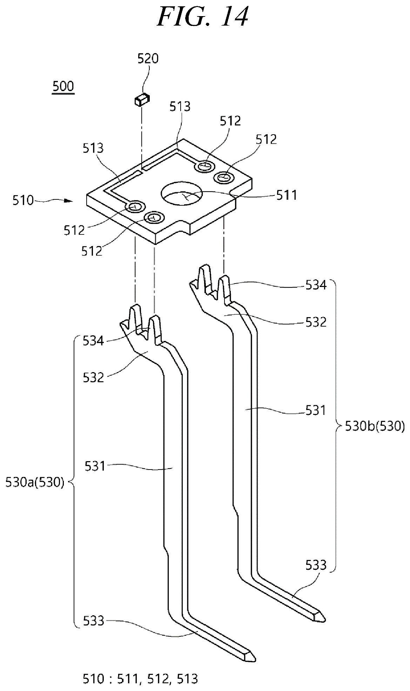

In the embodiment shown in FIGS. 12 to 15, the temperature sensing device 500 includes the support member 510, the temperature sensing member 520, and the temperature sensing terminal 530.

The support member 510 supports the temperature sensing member 520 and the temperature sensing terminal 530. In addition, the support member 510 is a portion at which the temperature sensing device 500 is fixedly coupled to the housing 100. The support member 510 is accommodated in the support member accommodation space 133 included in the temperature sensing accommodation part 130, to be supported by the support stepped portion 132. The support member 510 may be accommodated in the support member accommodation space 133 while covering the molding space 134 at the lower side.

The support member 510 may have an arbitrary shape capable of supporting the temperature sensing member 520 and the temperature sensing terminal 530. In the shown embodiment, the support member 510 is formed in a plate shape that has a polygonal section and has a thickness in the up-down direction. The shape of the support member 510 may be changed to correspond to that of the support stepped portion 132 or the support member accommodation space 133.

As the support member 510 is provided, the temperature sensing member 520 having a very small size can be accurately located at a predetermined position in the molding space 134. That is, when only the temperature sensing member 520 is provided, it is difficult that the position of the temperature sensing member 520 is accurately determined in a process of the molding material in a fluidic phase is changed into a solid phase.

Accordingly, the temperature sensing device 500 according to the embodiment of the disclosure includes the support member 510 that supports the temperature sensing member 520. Thus, the temperature sensing device 500 can be located easily and at an accurate position in the housing 100.

The support member 510 may be formed in an arbitrary shape capable of the temperature sensing member 520 and the temperature sensing terminal 530. In an embodiment, the support member 510 may be formed in the form of a PCB board. In the embodiment, the support member 510 may support the temperature sensing member 520 and the temperature sensing terminal 530 and at the same time electrically connect the temperature sensing member 520 and the temperature sensing terminal 530.

In the shown embodiment, the support member 510 includes the support through-hole 511, a terminal through-hole 512, and a circuit pattern 513.

The support through-hole 511 is formed inside the support member 510 while passing through the support member 510. The molding column 136 is coupled while passing through the support through-hole 511. The position of the support member 510 can be maintained by the molding column 136, which has been described above.

The support through-hole 511 may have a shape corresponding to that of the molding column 136. In the shown embodiment, the support through-hole 511 is formed as a disk-shaped space that has a circular section and has a thickness in the up-down direction.

The support through-hole 511 may be formed at a position corresponding to that of the molding column 136. In the shown embodiment, the support through-hole 511 is located to be biased to a rear side of the support member 510.

The terminal through-hole 512 is formed at an outer side of the support through-hole 512.

The terminal through-hole 512 is formed inside the support member 510 while passing through the support member 510. A support member coupling portion 534 of the temperature sensing terminal 530 is coupled while passing through the terminal through-hole 512. The support member coupling portion 534 coupled to the terminal through-hole 512 may be fixed by the phase-changed molding column 136 or a separate mold material.

The terminal through-hole 512 may have an arbitrary shape to which the support member coupling portion 534 can be coupled. In the shown embodiment, the terminal through-hole 512 is formed as a disk-shaped space that has a circular section and has a thickness in the up-down direction.

The terminal through-hole 512 may be provided in plurality. The plurality of terminal through-holes 512 may be coupled to a plurality of support member coupling portions 534, respectively. In the shown embodiment, the terminal through-hole 512 is provided in two pairs. One pair of terminal through-holes 512 are located at one side in the width direction of the support member 510, i.e., a front side in the shown embodiment, and another pair of terminal through-holes 512 are located at the other side of the width direction of the support member 510, i.e., a rear side in the shown embodiment.

Each pair of terminal through-holes 512 are arranged while being spaced apart from each other in a length direction of the support member 510, i.e., the left-right direction in the shown embodiment. The number and arrangement of terminal through-holes 512 may be changed depending on the number and arrangement of support member coupling portions 534.

The circuit pattern 513 electrically connects the temperature sensing terminal 530 coupled to the terminal through-hole 512 and the temperature sensing member 520. Information sensed by the temperature sensing member 520 may be transferred to the external control unit (not shown) via the circuit pattern 513 and the temperature sensing terminal 530.

The circuit pattern 513 is formed on a surface of the support member 510. In the shown embodiment, the circuit pattern 513 is formed on a portion of an upper surface of the support member 510.

The circuit pattern 513 extends between the temperature sensing member 520 and the temperature sensing terminal 530. In the shown embodiment, the circuit pattern 513 extends between a pair of terminal through-holes 512 (i.e., through which the support member coupling portions 534 pass) located at a relatively left side and the temperature sensing member 520 located at a left side of the support member 510.

In an embodiment, the circuit pattern 513 may be formed surround the pair of terminal through-holes 512 through which the support member coupling portions 534 pass. Even in any case, it is sufficient if the circuit pattern 513 can electrically connect the temperature sensing member 520 and the temperature sensing terminal 530.

The temperature sensing member 520 is configured to detect heat generated in the current-carrying body 310. Information on heat or temperature, detected by the temperature sensing member 520, may be transferred to the external control unit (not shown) through the circuit pattern 513 and the temperature sensing terminal 530.

The temperature sensing member 520 is coupled to the support member 510. The temperature sensing member 520 is located to be biased to one side in the length direction of the support member 510, i.e., a left side in the shown embodiment. It will be understood that the above-described direction is a direction toward the current-carrying body 310 or the communication opening 135.

The temperature sensing member 520 is electrically connected to the circuit pattern 513. The temperature sensing member 520 may be electrically connected to the temperature sensing terminal 530 through the circuit pattern 513. In addition, power necessary for an operation of the temperature sensing member 520 may be transferred to the temperature sensing member 520 through the temperature sensing terminal 530 and the circuit pattern 513.

The temperature sensing member 520 may be formed in an arbitrary shape that receives heat generated in the current-carrying body 310 in the form of convention or radiation to be able to detect the heat. In an embodiment, the temperature sensing member 520 may be provided as a thermistor, an infrared thermometer, or the like.

The temperature sensing terminal 530 electrically connects the temperature sensing member 520 and the external control unit (not shown). The temperature sensing terminal 530 may be electrically connected to the temperature sensing member 520 through the circuit pattern 513. In an embodiment in which the support member 510 is provided as a general board instead of a PCB board, the temperature sensing terminal 530 may be electrically connected directly to the temperature sensing member 520.

The temperature sensing terminal 530 is coupled to the support member 510. The temperature sensing terminal 530 is coupled to the terminal through-hole 512, to be electrically connected to the circuit pattern 513.

The temperature sensing terminal 530 is coupled to the housing 100. The temperature sensing terminal 530 is accommodated in the terminal accommodation groove 139 formed in the housing 100 to be supported by the terminal support portion 138.

The temperature sensing terminal 530 is at least partially exposed to an outer side of the housing 100. A portion exposed to the outer side of the housing 100 among portions of the temperature sensing terminal 530 is coupled to the external connector to be electrically connected to the external control unit (not shown).

The temperature sensing terminal 530 may be exposed to the outside of the housing 100 at a same position as the current-carrying terminal 340. In the shown embodiment, the temperature sensing terminal 530 is exposed to the outside through a right side of the housing 100. Therefore, the current-carrying terminal 340 and the temperature sensing terminal 530 may be electrically connected at the same time to the external control unit (not shown), using only a single connector, which has been described above.

The temperature sensing terminal 530 may be provided in plurality. Each of the plurality of temperature sensing terminals 530 may be coupled to the housing 100 and the support member 510. In the shown embodiment, the temperature sensing terminal 530 is provided in two, including a first temperature sensing terminal 530a and a second temperature sensing terminal 530b. The first and second temperature sensing terminals 530a and 530b are arranged while being spaced apart from each other in a width direction of the support member 510, i.e., the front-rear direction in the shown embodiment.

In the shown embodiment, the temperature sensing terminal 530 includes a terminal body 531, a terminal head portion 532, the terminal tail portion 533, and the support member coupling portion 534.

The terminal body 531 constitutes a body of the temperature sensing terminal 530. The terminal body 531 is a portion at which the temperature sensing terminal 530 is coupled to the housing 100. Specifically, the terminal body 531 is accommodated in the terminal accommodation groove 139, to be supported by the terminal support portion 138.

The terminal body 531 may have an arbitrary shape capable of extending between the support member 510 accommodated in the support member accommodation space 133 and the outside of the housing 100. In the shown embodiment, the terminal body 531 is formed in a plate shape that has a length in the up-down direction and has a thickness in the front-rear direction.

The terminal body 531 is continued to the terminal head portion 532. In the shown embodiment, one end portion in an extending direction of the terminal body 531, i.e., an upper end portion is continued to the terminal head portion 532. The terminal body 531 may be continued to the terminal head portion 532 while forming a predetermined angle with the terminal head portion 532. In an embodiment, the predetermined angle may be a right angle.

The terminal body 531 is continued to the terminal tail portion 533. In the shown embodiment, the other end portion in the extending direction of the terminal body 531, i.e., a lower end portion is continued to the terminal tail portion 533. The terminal body 531 may be continued to the terminal tail portion 533 while forming a predetermined angle with the terminal tail portion 533. In an embodiment, the predetermined angle may be a right angle.

The terminal head portion 532 connects the terminal body 531 and the support member coupling portion 534. The terminal head portion 532 is continued to each of the terminal body 531 and the support member coupling portion 534. The terminal head portion 532 supports the support member 510 at a lower side.

The terminal head portion 532 may have an arbitrary shape that is continued to each of the terminal body 531 and the support member coupling portion 534 and can support the support member 510. In the shown embodiment, the terminal head portion 532 is formed in a plate shape that has a length in the left-right direction and has a thickness in the front-rear direction.

The terminal head portion 532 is continued to the terminal body 531. In the shown embodiment, one end portion in an extending direction of the terminal head portion 532, i.e., a right end portion is continued to the terminal body 531.

The terminal head portion 532 is continued to the support member coupling portion 534. In the shown embodiment, one side in a height direction of the terminal head portion 532, i.e., an upper side is continued to the support member coupling portion 534.

The terminal tail portion 533 is a portion at which the temperature sensing terminal 530 is electrically connected to the external control unit (not shown). The terminal tail portion 533 is at least partially exposed to the outside of the housing 100.

The terminal tail portion 533 may extend in a same direction as the terminal head portion 532. In the shown embodiment, the terminal tail portion 533 is formed in the shape of a rod extending in the left-right direction.

The terminal tail portion 533 is continued to the terminal body 531. In the shown embodiment, one end portion in an extending direction of the terminal tail portion 533, i.e., a left end portion is continued to the other end portion in the extending direction of the terminal body 531, i.e., the lower end portion.

The terminal tail portions 533 of the first and second temperature sensing terminals 530a and 530b may be arranged to face each other with a pair of current-carrying terminals 340 interposed therebetween.

The support member coupling portion 534 is a portion at which the temperature sensing terminal 530 is coupled to the support member 510 and is electrically connected to the temperature sensing member 520. The support member coupling portion 534 is coupled while passing through the terminal through-hole 512, to be electrically connected to the circuit pattern 513.

The support member coupling portion 534 is continued to the terminal head portion 532. In the shown embodiment, the support member coupling portion 534 is continued to an upper end portion of the terminal head portion 532.

The support member coupling portion 534 may have an arbitrary shape that passes through the terminal through-hole 512 and can be electrically connected to the circuit pattern 513. In the shown embodiment, the support member coupling portion 534 is formed in a plate shape that has a length and a thickness in a same direction as the terminal body 531, i.e., that extends in the up-down direction and has a thickness in the front-rear direction, and is formed to have a sectional area thereof decreased in a direction toward the support member 510.

Thus, the support member coupling portion 534 can easily pass through the terminal through-hole 512.

The support member coupling portion 534 may be provided in plurality. The plurality of support member coupling portions 534 are arranged while being spaced apart from each other, to be coupled to the plurality of terminal through-holes 512, respectively. In the shown embodiment, the support member coupling portion 534 is provided in a pair for each of the first and second temperature sensing terminals 530a and 530b to be arranged while being spaced apart from each other in the left-right direction.

The number and arrangement of the support member coupling portions 534may be changed depending on the number and arrangement of the terminal through-holes 512.

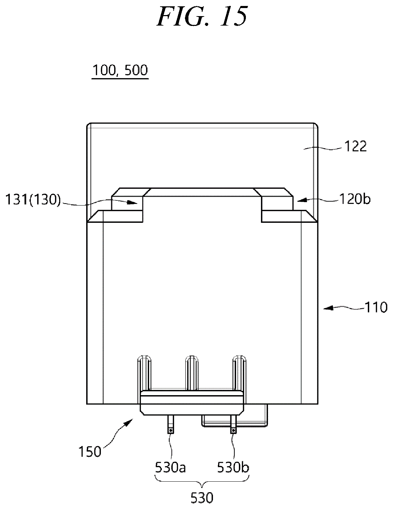

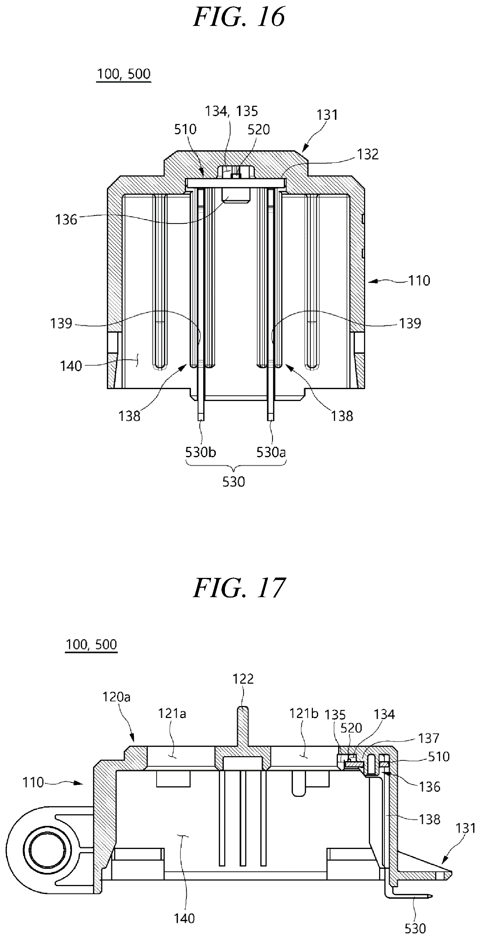

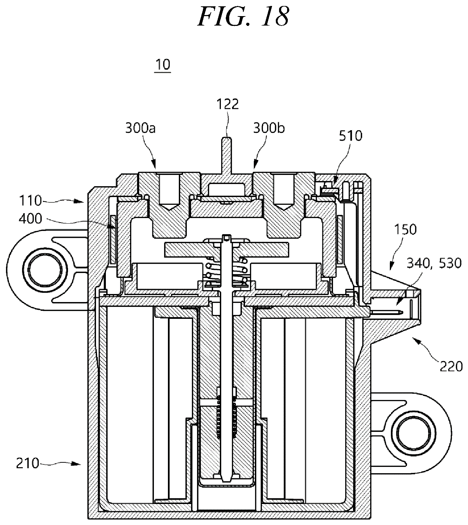

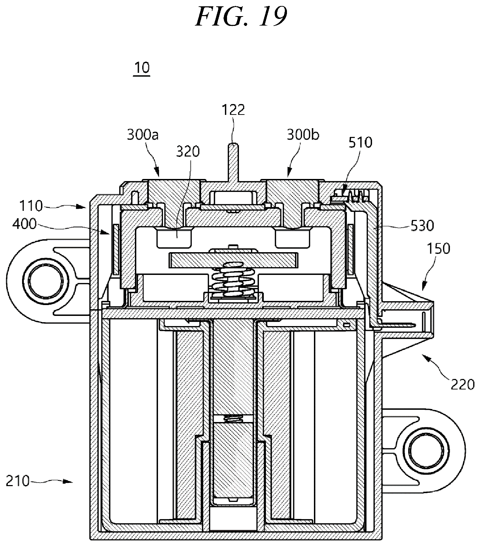

Referring to FIGS. 15 to 19, a coupling relationship of the housing 100, the current-carrying unit 300, and the temperature sensing device 500, which are included in the magnetic contactor 10 according to the embodiment of the disclosure, is shown.

As described above, the terminal tail portion 533 is exposed to the outside through a right side of the housing 100. It will be understood that the above-described direction is the same as a direction in which the current-carrying terminal 340 is exposed to the outside of the housing 100.

First, the temperature sensing device 500 is arranged such that the molding column 136 passes through the support through-hole 511, and the support member 510 is mounted on the support stepped portion 132 and the support protruding portion 137 and is accommodated in the support member accommodation space 133. Therefore, the support member 510 may be arranged in the housing 100 while covering the molding space 134.

At the same time, the temperature sensing device 500 is arranged such that the temperature sensing terminal 530 is accommodated in the terminal accommodation groove 139. Therefore, the temperature sensing terminal 530 may be supported by the terminal support portion 138.

The above-described process may be performed in a state in which the housing 10 is turned over in the up-down direction, i.e., a state in which the housing space 140 is arranged to be exposed through an upper side.

Next, as the external tip is inserted into the molding hollow 136a such that heat or pressure is applied, the molding column 136 is changed into a fluidic phase and is introduced into the molding space 134. When a predetermined time elapses, the molding material in the fluidic phase may be again changed into a solid phase, and the support member 510 and the upper inner surface of the housing body 110 may be coupled to each other.

The temperature sensing member 520 is spaced apart from the current-carrying body 310, and is located at one side adjacent to the communication opening 135, i.e., a left side in the shown embodiment. Heat generated in the current-carrying body 310 included in the second current-carrying unit 300b is radiated through the current-carrying outer circumference 320 and is transferred to the temperature sensing member 520 through the communication opening 135.

The temperature sensing member 520 may sense information on the transferred heat and may transfer the information to the external control unit (not shown) through the circuit pattern 513 and the temperature sensing terminal 530.

Although the embodiment of the disclosure has been described, the scope of the disclosure is not limited to the embodiment described in this specification, and those skilled in the art who understand the concept of the disclosure may easily propose other embodiments included within the scope of the disclosure by adding, modifying, or deleting components, but these additions, modifications, or deletions should be construed as being included in the scope of the disclosure.
10: Magnetic contactor 100: Housing
110: Housing body 120: Current-carrying accommodation part
120a: First current-carrying accommodation part 120b: Second current-carrying accommodation part
121: Current-carrying through-hole 121a: First current-carrying through-hole
121b: Second current-carrying through-hole 122: Insulating partition wall
130: Temperature sensing accommodation part 131: Temperature sensing boss portion
132: Support stepped portion 133: Support member accommodation space
134: Molding space 135: Communication opening 135
136: Molding column 136a: Molding hollow
137: Support protruding portion 138: Terminal support portion
139: Terminal accommodation groove 140: Housing space
150: Terminal cover 200: Frame
210: Frame body 220: Terminal protection member
230: Arc chamber 300: Current-carrying unit
300a: First current-carrying unit 300b: Second current-carrying unit
310: Current-carrying body 320: Current-carrying outer circumference
330: Current-carrying hollow 340: Current-carrying terminal
340a: First current-carrying terminal 340b: Second current-carrying terminal
400: Arc inducing unit 410: Arc inducing frame
420: Magnetic member 430: Arc inducing space
500: Temperature sensing device 510: Support member
511: Support through-hole 512: Terminal through-hole
513: Circuit pattern 520: Temperature sensing member
530: Temperature sensing terminal 530a: First temperature sensing terminal
530b: Second temperature sensing terminal 531: Terminal body
532: Terminal head portion 533: Terminal tail portion
534: Support member coupling portion

## Claims

1. A magnetic contactor comprising:
a housing having a housing space formed therein;
a current-carrying unit electrically connected to an external power source or an external load, and coupled to the housing to be at least partially exposed to an outside of the housing; and
a temperature sensing device coupled to the housing to be at least partially exposed to the outside of the housing, located adjacent to the current-carrying unit while being spaced apart from the current-carrying unit, and configured to detect heat generated in the current-carrying unit,
wherein the temperature sensing device comprises:
a support member coupled to the housing and accommodated in the housing space;
a temperature sensing member coupled to the support member and configured to detect the heat; and
a temperature sensing terminal coupled to the support member, electrically connected to the temperature sensing member, and at least partially exposed to the outside of the housing.

2. The magnetic contactor of claim 1, wherein the housing comprises:
a support stepped portion supporting the support member at one side in a height direction;
a molding space surrounded by the support stepped portion and having the temperature sensing member located therein; and
a communication opening formed recessed in one portion of the support stepped portion and extending between the molding space and the current-carrying unit, to constitute a path through which the heat is transferred.

3. The magnetic contactor of claim 2, wherein the communication opening is formed such that a sectional area thereof is decreased in a direction toward the temperature sensing member from the current-carrying unit.

4. The magnetic contactor of claim 2, wherein the housing comprises a support member accommodation space formed recessed in an inner surface of the housing, located at one side in a height direction of the support stepped portion, and accommodating the support member.

5. The magnetic contactor of claim 4, wherein the support stepped portion extends while surrounding the support member accommodation space at an outer side in a horizontal direction, and is configured to support a portion adjacent to an outer circumference of the support member.

6. The magnetic contactor of claim 4, wherein the housing comprises a support protrusion formed to protrude on an inner surface of the housing surrounding the support member accommodation space, and supporting the support member at an outer side in a horizontal direction.

7. The magnetic contactor of claim 6, wherein the support protrusion is provided in plurality, and the plurality of support protrusions are arranged while being spaced apart from each other along one direction and another direction orthogonal to the one direction, to support the support member at a plurality positions.

8. The magnetic contactor of claim 4, wherein the housing comprises a molding column located in the support member accommodation space, extending in a direction opposite to the inner surface of the housing, and formed to be phase-changed by heat or pressure, and
wherein the support member comprises a support through-hole formed inside the support member while passing through the support member, so that the molding column passes therethrough.

9. The magnetic contactor of claim 8, wherein a molding hollow into which a tip applying the heat or the pressure is inserted is formed recessed inside the molding column.

10. The magnetic contactor of claim 1, wherein the temperature sensing device is located to be biased to one side in a length direction of the housing, and
wherein the housing comprises:
a terminal accommodation groove formed recessed in an inner surface of the one side and accommodating the temperature sensing terminal; and
a pair of terminal support portions protruding on the inner surface of the one side, extending in a height direction of the housing, and arranged to face each other with the terminal accommodation groove interposed therebetween along a width direction of the housing, to support the temperature sensing terminal.

11. The magnetic contactor of claim 1, wherein the support member comprises:
a terminal through-hole formed inside the support member while passing through the support member; and
a circuit pattern extending between the temperature sensing member and the terminal through-hole, and
wherein the temperature sensing terminal is inserted into the terminal through-hole to be electrically connected to the circuit pattern.

12. The magnetic contactor of claim 11, wherein the temperature sensing terminal comprises:
a terminal body coupled to the housing and extending in a height direction of the housing;
a terminal head portion continued to one end portion in a height direction of the terminal body, extending in a length direction of the housing, and supporting the support member; and
a support member coupling portion continued to the terminal head portion and extending in the height direction of the housing to be inserted into the terminal through-hole.

13. The magnetic contactor of claim 12, wherein the temperature sensing terminal comprises a terminal tail portion continued to the other end portion in the height direction of the terminal body, extending in the length direction of the housing, and at least partially exposed to the outside of the housing.

14. The magnetic contactor of claim 1, wherein the current-carrying unit comprises a current-carrying terminal at least partially exposed to one side of the outside of the housing to be electrically connected to the outside.

15. The magnetic contactor of claim 14, wherein the temperature sensing terminal comprises a terminal tail portion extending in a length direction of the housing and at least partially exposed to the one side of the outside of the housing.
